# EUROPEAN PATENT APPLICATION

(11) **EP 2 428 963 A1**
(43) Date of publication of application: **14.03.2012**
(21) Application number: 09844360.9
(22) Date of filing: 04.05.2009
(51) Int. Cl.: G21C 3/08

(54) **METHOD FOR FORMING FINE PROTRUSIONS ON CLADDING SURFACE OF NUCLEAR FUEL ROD CONTAINING ZIRCONIUM**

(71) Applicant: Postech Academy-Industry- Foundation, Pohang-city, Kyungsangbuk-do 790-784 (KR)
(72) Inventor: KIM, Joon-Won, Gyeongsangbuk-do 790-751 (KR); KIM, Moo-Hwan, Gyeongsangbuk-do 790-885 (KR); LEE, Chan, Seoul 120-762 (KR); KIM, Hyung-Mo, Gyeongsangbuk-do 712-190 (KR)
(74) Representative: Modiano, Micaela Nadia
(86) International application number: PCT/KR2009/002351
(87) International publication number: WO 2010/128691

(57) **Abstract**

A method for forming roughness on an outer surface of cladding of a fuel nuclear rod including zirconium includes: positioning the cladding of the nuclear fuel rod at a first electrode and connecting a positive electrode thereto, and positioning a conductive plate at a second electrode and connecting a negative electrode thereto; putting the cladding of the nuclear fuel rod in an electrolyte solution; and applying voltage to the positive electrode and the negative electrode to cause oxidation on the outer surface of the cladding of the nuclear fuel rod. In this case, the electrolyte solution is maintained at 10°C or lower.

## Description

### [Technical Field]

The present invention relates to a method for treating the surface of cladding of nuclear fuel rod.

### [Background Art]

Zirconium, having a melting point of 1,852 degrees Celsius and being chemically stable, has properties that it is greatly resistant to external corrosion. Thus, zirconium, a zircaloy, or zirconium oxide is used for goods or articles which are not to corrode, such as nuclear fuel rod coating film in a nuclear power plant, rustproof ceramic kitchen utensils, tools used for treating chemical medicines, and the like.

Meanwhile, nuclear fuel is covered by an aluminum or magnesium coating film so as to prevent nuclear wastes produced in the course of a nuclear fission from being mixed with a coolant and discharged to the outside. Zirconium, having a melting point of 1,852 degrees Celsius and being chemically stable, has properties that it is greatly resistant to external corrosion. Thus, zirconium, a zircaloy, or zirconium oxide is used for goods or articles which are not to corrode, such as nuclear fuel rod coating film in a nuclear power plant, rustproof ceramic kitchen utensils, tools used for treating chemical medicines, and the like.

Meanwhile, nuclear fuel is covered by an aluminum or magnesium coating film so as to prevent nuclear wastes produced in the course of a nuclear fission from being mixed with a coolant and discharged to the outside. In case of a light-water nuclear reactor, low-concentration enriched uranium dioxide (UO₂) powder is sintered into a cylindrical tablet having a diameter of 2 cm and height of 2 cm to create a dark brown pellet, which is then put into a thin metal tube having a thickness of 3mm clad (or coated) with a zircaloy which has good corrosion resistance to high temperature cooling water, and then both ends of the metal tubes are hermetically sealed.

In general, tens to hundreds of the metal tubes are grouped to form a fuel assembly (or bundle) and the fuel assembly is used as a unit. Nuclear reactor includes hundreds of such assemblies. The cladding tube is formed to have a thickness of 1mm or smaller to facilitate thermal conduction. In the occurrence of nuclear fission, the temperature of the center of a fuel pellet is approximately 200°C, the temperature of the surface of the fuel pellet is 600°C, and the temperatures of an inner surface and outer surface of a nuclear fuel rod are 400°C and 300°C, respectively.

Thus, if the fuel rod, exposed to high temperature, ruptures, nuclear fission products would be leaked out to potentially cause a serious problem, so continued efforts are required to enhance the stability.

### [DISCLOSURE]

### [Technical Problem]

The present invention has been made in an effort to provide a method for forming roughness on an outer surface of cladding including zirconium to have hydrophilicity to thus improve stability of a nuclear fuel rod used in a nuclear power plant.

### [Technical Solution]

An exemplary embodiment of the present invention provides a method for forming roughness on an outer surface of cladding of a nuclear fuel rod including zirconium, including: positioning the cladding of the nuclear fuel rod at a first electrode and connecting a positive electrode thereto, and positioning a conductive plate at a second electrode and connecting a negative electrode thereto; putting the cladding of the nuclear fuel rod in an electrolyte solution; and applying voltage to the positive electrode and the negative electrode to cause oxidation on the outer surface of the cladding of the nuclear fuel rod.

The temperature of the electrolyte solution may be maintained at 10°C or lower. The method may be performed while maintaining the temperature of the electrolyte solution at a temperature range of 0°C to 10°C.

The electrolyte solution may be a 0.01 wt% to 1.0 wt% of hydrofluoric acid (HF) solution. The voltage applied to the positive electrode and the negative electrode may be set to range from 20V to 40V in performing the method.

Time for applying voltage to the positive electrode and negative electrode may be set to range from 10 minutes to 30 minutes in performing the method.

### [Advantageous Effects]

According to an embodiment of the present invention, in the method for forming roughness on the outer surface of the cladding of the nuclear fuel rod including zirconium, hydrophilic oxide film having a fine structure can be formed on the outer surface of zirconium and zircaloy at a low cost through anodization compared with a method such as MEMS, or the like.

In addition, because even a large curved surface can be processed through anodization, the surface having a cylindrical shape such as a nuclear fuel rod can be easily processed to have hydrophilicity.

Also, because the cladding of the nuclear fuel rod is formed to be hydrophilic, a contact angle with respect to a liquid can be reduced to increase heat transfer efficiency, and thus, the efficiency of a nuclear power plant can be improved.

### [Description of the Drawings]

FIG. 1 is a schematic view of a nuclear fuel rod constituting a fuel assembly used in a nuclear power plant.
FIG. 2 is a schematic view of a fuel assembly used in the nuclear power plant.
FIG. 3 is a 10 thousand times-enlarged SEM photograph showing an outer surface of a zircaloy treated by anodization according to a method according to a first exemplary embodiment of the present invention.
FIG. 4 is an 80 thousand times-enlarged SEM photograph showing an outer surface of a zircaloy treated by anodization according to a method according to a first exemplary embodiment of the present invention.
FIG. 5 is an 80 thousand times-enlarged SEM photograph showing an outer surface of a zircaloy treated by anodization according to a method according to a second exemplary embodiment of the present invention.
FIG. 6 is an 80 thousand times-enlarged SEM photograph showing an outer surface of a zircaloy treated by anodization according to a method according to a third exemplary embodiment of the present invention.
FIG. 7 is a 10 thousand times-enlarged SEM photograph showing an outer surface (Comparative Example 1) of a zircaloy not treated by anodization.
FIG. 8 is an 80 thousand times-enlarged SEM photograph showing an outer surface of a zircaloy treated by anodization under the conditions of Comparative Example 2.
FIG. 9 is an 80 thousand times-enlarged SEM photograph showing an outer surface of a zircaloy treated by anodization under the conditions of Comparative Example 3.
FIG. 10 is a photograph showing measurement of a contact angle on the outer surface of the zircaloy according to Comparative Example 1.
FIG. 11 is a photograph showing measurement of a contact angle on the outer surface of the zircaloy according to Exemplary Embodiment 1 of the present invention.

### [Mode for Invention]

Exemplary embodiments of the present invention will now be described in detail such that those can be easily carried out by a person skilled in the art with reference to the accompanying drawings. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

According to prior research (See Kandlikar, S, G., 2001, "A Theoretical Model to Predict Pool Boiling CHF Incorporating Effects of Contact Angle and Orientation," Journal of Heat Transfer, Vol. 123, pp. 1071-1079), in a boiling heating apparatus, as the outer surface of a heater is close to hydrophilicity, a critical heat flux (CHF) increases (namely, the more hydrophilic the outer surface of the heater is, the more the CHF increases). The CHF refers to a point from which the outer surface temperature of the heater sharply goes up, while heat flux moving to a fluid is not further increased, in a state in which the heat flux is raised by operating the heater. If heating continues to pass this point, the heater, succumbing to the heat, will be broken, so in actuality, the heat engine is operated at a level lower than the CHF for the security.

When the CHF is increased through a surface modification, because the heat engine can be operated at a higher temperature, energy efficiency can be improved according to the principle of the Rankine cycle. Also, even if an actual operation temperature is not increased, because the difference between the heat flux and the CHF becomes larger, the stability and security can be increased as much.

This principle may be applied for a nuclear power plant to make the outer surface of cladding of a nuclear fuel rod exposed to high temperature hydrophilic, to thereby raise the CHF and thus secure high stability.

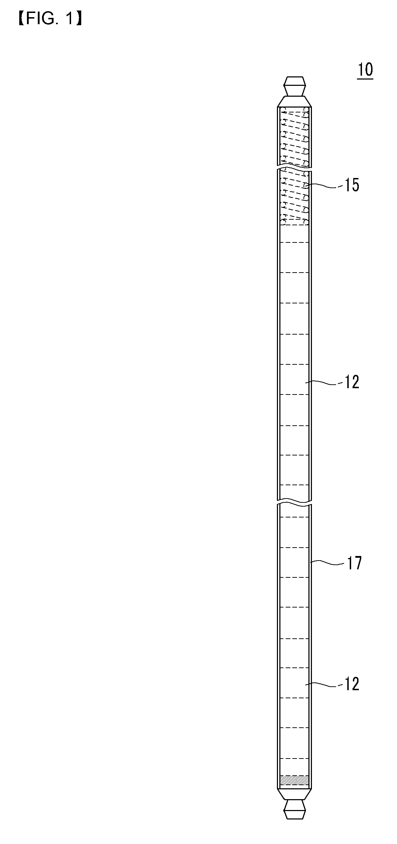

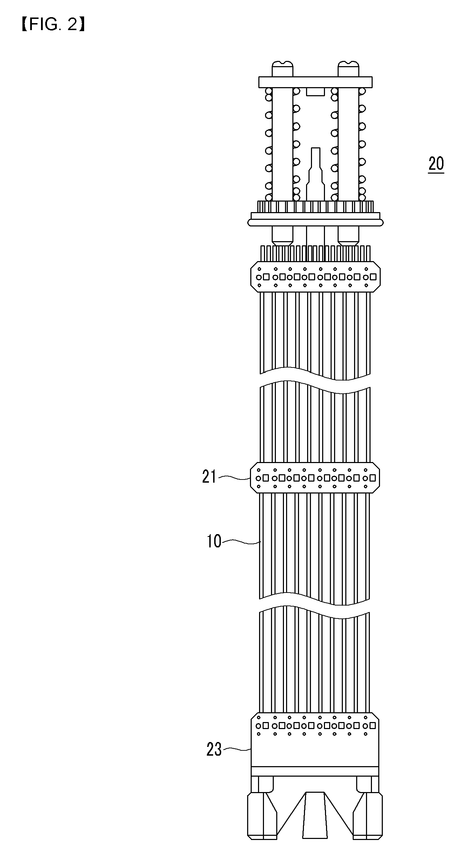

FIG. 1 is a schematic view of a nuclear fuel rod constituting a fuel assembly used in a nuclear power plant, and FIG. 2 is a schematic view of a fuel assembly used in the nuclear power plant.

Nuclear fuel rods 10, each including uranium dioxide (UO₂), may be arranged by 16x16 and fixed by spacer grids 21 and 23 to constitute a nuclear fuel assembly 20. The nuclear fuel rod 10 has a cylindrical shape. A plurality of cylindrical pellets 12 are accumulated in the nuclear fuel rod 10, and in order to prevent the pellets 12 from moving in the nuclear fuel rod 10, a compression spring 15 may be inserted at an upper side of the pellets 12.

A cladding 17 forming an outer cover of the nuclear fuel rod 10 may be made of zircaloy, an alloy of tin and zirconium obtained by mixing chromium and iron.

Meanwhile, in order to make the surface of a solid hydrophilic, a method for changing chemical characteristics of the surface and a method for changing a surface shape in a microscale or in a nanoscale may be used, and in the present exemplary embodiment, the method of changing a surface shape in a microscale or in a nanoscale is employed.

Namely, in the present exemplary embodiment, a micro/nano scale structure may be formed on the outer surface of the cladding of the nuclear fuel rod, while accelerating oxidation on the outer surface of the cladding electrochemically by applying anodization to the cladding. Anodization is advantageously applied to a large area, a curved surface, or the like, at a low cost, compared with an MEMS (microelectromechanical system) which incurs a great amount of seed investment cost because it basically requires a clean facility and uses photolithography which can be hardly applicable to a large area or a curved surface.

In order to apply anodization to the outer surface of the cladding of the nuclear fuel rod including zirconium, first, the cladding of the nuclear fuel rod is positioned at a first electrode and a positive electrode is connected thereto, and a conductive plate is positioned at a second electrode and a negative electrode is connected thereto. A conductive plate made of platinum may be used as the conductive plate connected to the negative electrode.

The nuclear fuel rod cladding connected to the positive electrode and the conductive plate connected to the negative electrode are put in an electrolyte solution. As the electrolyte solution, a hydrofluoric acid solution ranging from 0.01 wt% to 1.0 wt% may be used. If the hydrofluoric acid solution is less than 0.01 wt%, the speed of oxidation will be too slow to be actually applied, and if the hydrofluoric acid solution exceeds 1.0 wt%, an oxidized film of the nuclear fuel rod cladding will be wholly peeled off to have an electropolishing effect, so a hydrophilic surface cannot be obtained.

Thereafter, when voltage is applied to the positive electrode and the negative electrode, oxidation start from the outer surface of the cladding of the nuclear fuel rod.

In this case, the temperature to cause oxidation can be changed by regulating the temperature of external cooling water, and the temperature of the electrolyte solution may be maintained at 10°C or lower and can be maintained within a temperature range of 0°C to 10°C. If the temperature of the electrolyte solution is lower than 0°C, the speed of oxidation will be too slow to be actually applied, and if the temperature of the electrolyte solution is higher than 10°C, the oxidized film of the cladding of the nuclear fuel rod will be peeled off, failing to formation of a hydrophilic surface.

Also, the voltage applied to the positive electrode and the negative electrode may be selectively applied within the range of 20V to 40V, and time for applying the voltage to the positive electrode and the negative electrode may be set to range from 10 minutes to 30 minutes. If the application voltage is lower than 20V, the speed of oxidation will be too slow to be actually applied, 5and if the application voltage is higher than 40V, the oxidized film of the cladding of the nuclear fuel rod will be wholly peeled off to have an electropolishing effect, so a hydrophilic surface cannot be obtained. If the reaction time is less than 10 minutes, wettability of the outer surface of the cladding of the nuclear fuel rod is not sufficient, and if the reaction time exceeds 30 minutes, the oxidized film of the cladding of the nuclear fuel rod will be peeled off, a hydrophilic surface cannot be formed.

When the anodization process is performed on the outer surface of the cladding of the nuclear fuel rod including zirconium, the outer surface of the cladding has hydrophilicity having a contact angle of 10 degrees or some. The contact angle is obtained by measuring an angle between a surface of a droplet and a surface of a solid, such as metal, or the like, to which the droplet is attached.

### [Experimental Example]

Nuclear fuel rod cladding made of a zircaloy was connected to a positive electrode, and a platinum plate was connected to a negative electrode, and anodization was performed by using a hydrofluoric acid (HF) solution as an electrolyte solution. The anodization was performed while changing the concentration of the electrolyte solution, the temperature of the electrolyte solution, an application voltage, and a reaction time as shown in Table 1 below.

**[Table 1]**

| Classification | Electrolyte solution | Temperature of electrolyte solution | Applied voltage | Reaction time | Contact angle |
|---|---|---|---|---|---|
| Exemplary Embodiment1 | 0.5wt% HF | 10°C | 30V | 30 min. | 8° |
| Exemplary Embodiment2 | 0.5wt% HF | 10°C | 30V | 20 min. | 10° |
| Exemplary Embodiment3 | 0.5wt% HF | 10°C | 15V | 60 min. | 12° |
| Comparative Example1 | Anodization was not performed | | | | 70° |
| Comparative Example2 | 0.5wt% HF | 25°C | 5V | 20 min. | 78° |
| Comparative Example3 | 0.1wt% HF | 25°C | 5V | 30 min. | - |

Namely, in the Exemplary embodiments 1 to 3, in performing the anodization, 0.5 wt% of hydrofluoric acid solution was maintained at 10°C, the 5applied voltage was changed to 30V or 15V, and the reaction time was set to be 30 minutes, 20 minutes, and 60 minutes.

In Comparative Example 1, anodization was not performed, while in Comparative Examples 2 and 3, anodization was performed under the conditions in which the temperature of an electrolyte solution was maintained at room temperature (25°C), the concentration of hydrofluoric acid solution was 0.5 wt% and 0.1 wt%, respectively, an application voltage was 5V, and a reaction time was 20 minutes and 30 minutes, respectively.

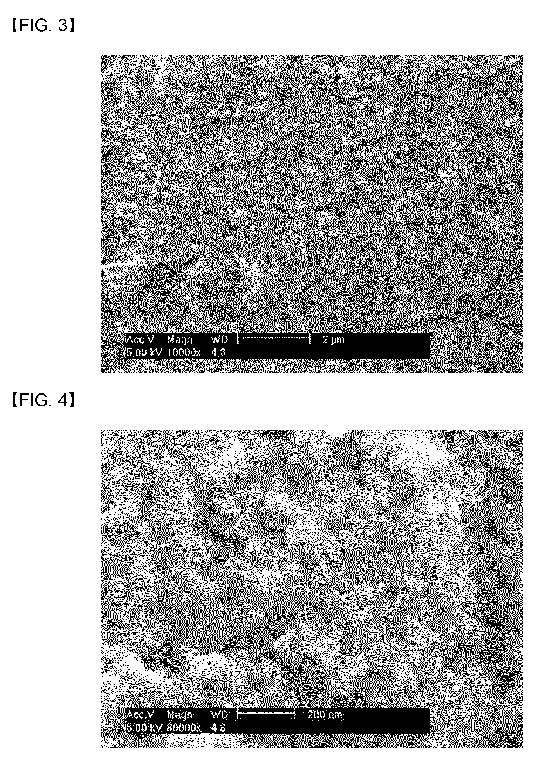

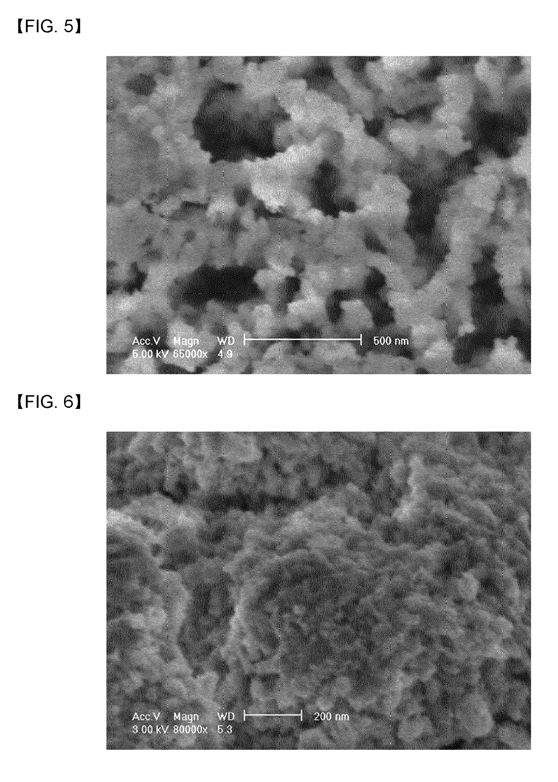

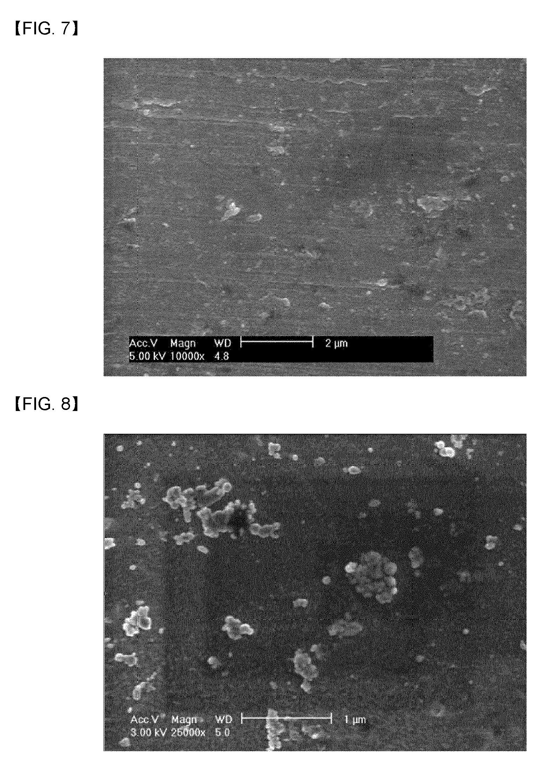

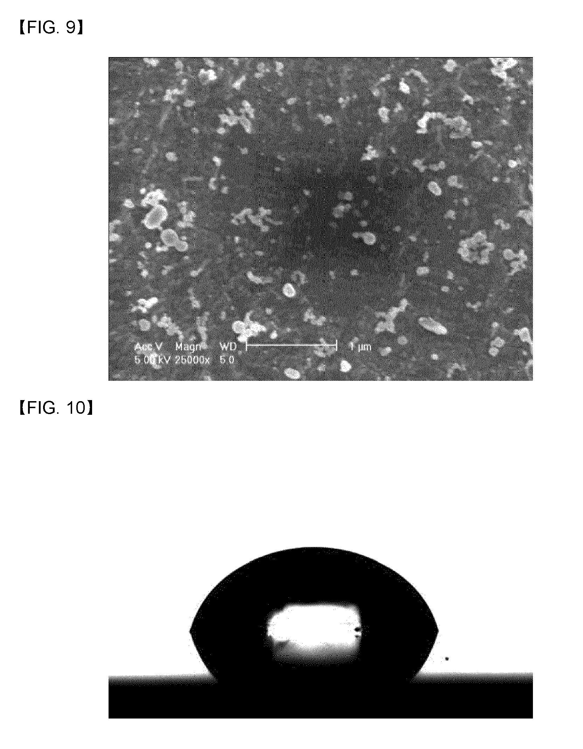

The results of Exemplary Embodiment 1 are shown in FIGS. 3 and 4, and the results of Exemplary Embodiments 2 and 3 are shown in FIGS. 5 and 6, respectively. The results of Comparative Example 1 are shown in FIG. 7, and the results of Comparative Examples 2 and 3 are shown in FIGS. 8 and 9, respectively.

Compared with Comparative Example 1 (anodization was not performed), it is noted, in Exemplary embodiments 1 to 3, that micro/nano structures of various patterns are formed on the outer surface of the cladding.

Also, with reference to FIGS. 8 and 9, in case of Comparative Examples 2 and 3, it is noted that the oxidized film was peeled off, without any micro/nano structure observed thereon, and the outer surface of the cladding is shown to have a similar form as that in Comparative Example 1 in which anodization was not performed. In particular, in case of Comparative Example 3, because the oxidized film was partially peeled off, the outer surface of the cladding became uneven, making it impossible to measure a contact angle.

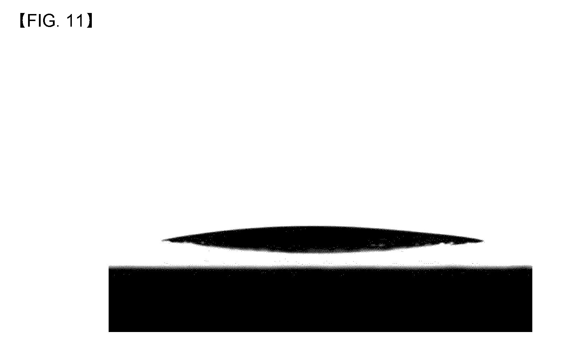

As for the contact angle on the outer surface of the cladding in Comparative Example 1 and the contact angle on the outer surface of the cladding in Exemplary Embodiment 1 with reference to FIGS. 10 and 11, the contact angle in Comparative Example 1 was measured to be approximately 70°, while that in Exemplary Embodiment 1 was measured to be approximately 8° and those in Exemplary Embodiments 2 and 3 were measured to be 10° and 12°, respectively.

Thus, it was confirmed that the outer surface of the cladding of the nuclear fuel rod including zirconium was changed to be hydrophilic surface through the anodization.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method for forming roughness on an outer surface of cladding of a nuclear fuel rod including zirconium to modify the outer surface of the cladding, the method comprising:
positioning the cladding of the nuclear fuel rod at a first electrode and connecting a positive electrode thereto, and positioning a conductive plate at a second electrode and connecting a negative electrode thereto;
putting the cladding of the nuclear fuel rod in an electrolyte solution; and
applying voltage to the positive electrode and the negative electrode to cause oxidation on the outer surface of the cladding of the nuclear fuel rod.

2. The method of claim 1, wherein the temperature of the electrolyte solution is maintained at 10°C or lower.

3. The method of claim 2, wherein the temperature of the electrolyte solution is maintained within the range of 0°C to 10°C.

4. The method of claim 1, wherein the electrolyte solution is a 0.1 wt% to 1.0 wt% of hydrofluoric acid (HF) solution.

5. The method of claim 1, wherein the voltage applied to the positive electrode and the negative electrode ranges from 20V to 40V.

6. The method of claim 5, wherein time for applying voltage to the positive electrode and negative electrode ranges from 10 minutes to 30 minutes in performing the method.

7. A nuclear fuel rod having roughness formed on an outer surface of cladding thereof according to the method of any one of claim 1 to claim 6.
